# FASCICULE DE BREVET EUROPEEN

(11) **EP 4 248 312 B1**
(45) Date de publication et mention de la délivrance du brevet: **04.12.2024**
(21) Numéro de dépôt: 21807182.7
(22) Date de dépôt: 19.10.2021
(51) Int. Cl.: G06F 9/30, H04N 25/74, G06F 9/22, H04N 25/71

(54) **GÉNÉRATEUR DE PHASES PROGRAMMABLE D'UN DÉTECTEUR DE RAYONNEMENT**
PROGRAMMIERBAR TAKTGENERATOR FÜR EINEN STRAHLUNGSSENSOR
PROGRAMMABLE TIMING GENERATOR OF A RADIATION SENSOR

(30) Priorité: 19.11.2020 FR 2011862
(43) Date de publication de la demande: 27.09.2023
(73) Titulaire: LYNRED, 91120 Palaiseau (FR)
(72) Inventeur: MEJEAN, Philippe, 38210 MONTAUD (FR)
(74) Mandataire: Cabinet Laurent & Charras
(86) Numéro de dépôt international: PCT/FR2021/051816
(87) Numéro de publication internationale: WO 2022/106766

(56) Documents cités:
- EP-A2- 1 596 286
- US-A1- 2014 247 382

## Description

### DOMAINE DE L'INVENTION

La présente invention a trait au domaine de la détection de rayonnements électromagnétiques et notamment, à la détection de rayonnements infrarouges.

L'invention concerne plus particulièrement un générateur de phases programmable pour un tel détecteur, c'est-à-dire un circuit électronique permettant de commander le fonctionnement du détecteur.

L'invention trouve une application particulièrement avantageuse pour commander un détecteur comportant plusieurs modes de fonctionnement distincts.

### ETAT ANTERIEUR DE LA TECHNIQUE

Les détecteurs destinés à l'imagerie thermique, ou infrarouge, sont classiquement réalisés sous la forme d'une matrice de détecteurs élémentaires, formant des points d'image ou pixels, selon une ou deux dimensions. Pour garantir l'isolation thermique des détecteurs, ces derniers sont suspendus au-dessus d'un substrat via des bras de soutien.

Le substrat comporte usuellement des moyens d'adressage séquentiel des détecteurs élémentaires et des moyens d'excitation électrique et de pré-traitement des signaux électriques générés à partir de ces détecteurs élémentaires. Ce substrat et les moyens intégrés sont communément désignés par le terme « circuit de lecture ».

Pour commander un tel circuit de lecture, il est connu d'utiliser un générateur permettant de fournir les signaux nécessaires au fonctionnement du circuit. Ces signaux sont appelés « phases ». De manière classique, les phases permettent de piloter des interrupteurs présents au niveau du circuit de lecture et de chaque détecteur élémentaire. Par exemple, ces interrupteurs peuvent contrôler l'échange d'informations entre une photodiode et un circuit de lecture, l'échange de données entre différentes capacités et amplificateurs, ainsi que les transmissions électriques entre les détecteurs élémentaires.

Avec ces phases, un détecteur infrarouge peut être commandé pour intégrer différents gains ou pour réaliser des fonctions complexes, tels que l'obtention d'une image bi-spectrale.

Au sens de l'invention, le « gain » correspond à un facteur de conversion entre un photon et une tension. Ce facteur de conversion dépendant de l'intégration réalisée, par exemple de la capacité d'intégration utilisée, et de la dynamique des phases.

Pour réaliser des fonctions complexes, le document WO2019/166465 illustre, par exemple, la forme des phases attendues pour obtenir un mode de fonctionnement d'un détecteur infrarouge dans lequel le détecteur présente une haute-dynamique de lecture. La demande de brevet américaine US 2014/247382 décrit aussi un générateur de phases programmable pour piloter un tableau de pixels.

Les phases générées par un générateur de phases permettent donc de placer un détecteur infrarouge dans un mode de fonctionnement spécifique en commandant la durée d'intégration, l'activation et/ou l'inhibition de certains composants du circuit de lecture ou des détecteurs élémentaires.

Un générateur de phases est classiquement réalisé, en fonction de formes de phases définies avant la réalisation du détecteur infrarouge, en implémentant des fonctions logiques permettant de créer les formes des phases prédéfinies. Ce type de générateur de phases est donc figé ou « *hardcoded* » dans la littérature anglo-saxonne. Bien entendu, ces phases peuvent varier en fonction d'un signal de commande pour activer l'un ou l'autre des modes de fonctionnement du détecteur infrarouge.

Pour satisfaire au maximum les besoins des utilisateurs, les constructeurs intègrent de plus en plus de fonctions dans les circuits de lecture et les détecteurs élémentaires, si bien qu'il devient possible d'obtenir un même gain en générant des phases distinctes, c'est-à-dire en modifiant le séquencement et/ou la valeur binaire des phases. Ainsi, après l'implémentation du détecteur infrarouge, il est souvent observé que la forme des phases permettant d'obtenir un gain spécifique n'est pas optimale en raison des éléments parasites et des limitations du détecteur infrarouge, observables uniquement après la réalisation de celui-ci.

Typiquement, des éléments parasites peuvent apparaitre en raison des tolérances de fabrication des capacités réalisées au niveau des détecteurs élémentaires. En outre, si plusieurs capacités sont réalisées au niveau de chaque détecteur élémentaire de sorte à obtenir des gains distincts, il peut être recherché quelles capacités doivent être activées pour obtenir chaque gain de manière optimale suite à la mesure des valeurs réelles des capacités réalisées.

Dans les détecteurs infrarouges les plus récents, il n'est pas rare d'intégrer plus de 15 modes de fonctionnement, par exemple 18 modes de fonctionnement. Avec un tel nombre de modes de fonctionnement, l'implémentation d'un générateur de phases figé devient particulièrement complexe, car celui-ci doit intégrer tous les composants électroniques permettant de générer la forme de chaque phase de chaque mode de fonctionnement. En outre, avec la multiplicité des composants électroniques, le générateur de phases engendre une consommation bien supérieure à la consommation d'un générateur de phases figé d'un détecteur infrarouge présentant que peu de modes de fonctionnement.

Pour remédier en partie à ces problèmes et permettre la génération de phases optimales, il est possible d'utiliser un générateur de phases programmable. Un tel générateur est semblable à un microprocesseur ; il intègre une mémoire de programme dans laquelle sont codées les instructions à réaliser pour générer les phases. A partir de cette mémoire de programme, un processeur interprète les instructions codées dans la mémoire de programme. De manière classique, un microcontrôleur intègre également une mémoire de données, un registre de travail ou d'état, des convertisseurs analogiques-numériques et numériques-analogiques, et des opérateurs câblés permettant d'effectuer des opérations arithmétiques, des opérations conditionnelles et des exécutions spéculatives du code.

L'inconvénient majeur de ces générateurs de phases programmables réside dans leur consommation, typiquement au moins dix fois supérieure à celle d'un générateur de phases figé.

Le problème technique que se propose de résoudre l'invention est donc d'obtenir un générateur de phases programmable, c'est-à-dire permettant de commander l'obtention de plusieurs phases distinctes en fonction d'un code de programme, avec une consommation comparable à celle d'un générateur de phases figé.

### EXPOSE DE L'INVENTION

Pour répondre à ce problème technique, l'invention propose un générateur de phases programmable dépourvu de mémoire de données, de registre de travail ou d'état, de convertisseur analogique-numérique et numérique-analogique, et d'opérateur câblé permettant d'effectuer des opérations arithmétiques, des opérations conditionnelles et des exécutions spéculatives du code.

En effet, l'invention est issue d'une recherche des instructions les plus simples permettant de générer les phases spécifiques d'un détecteur infrarouge. Il a été observé qu'avec au maximum sept instructions, il est possible de générer toutes les formes des phases classiquement utilisées dans ce domaine spécifique.

Ainsi, il est possible de former un générateur de phases programmable très simple, c'est-à-dire capable d'interpréter uniquement des instructions codées sur 3 bits.

A cet effet, l'invention concerne un générateur de phases d'un détecteur, le générateur intégrant au moins une machine élémentaire d'interprétation d'un microcode stocké dans un registre, chaque machine élémentaire comportant :
▪ au moins une entrée de commande comportant un détecteur de changement de niveau logique ;
▪ au moins une sortie de phase comportant un commutateur commandé, permettant de définir le niveau logique de la sortie de phase et un inverseur commandé permettant d'inverser le niveau logique de la sortie de phase ;
▪ au moins un signal d'horloge associé à un compteur ;
▪ un module de chargement des instructions et des arguments stockés dans le registre, les instructions étant codées sur 3 bits et permettant d'effectuer au moins :
   - une application d'un niveau logique sur au moins une sortie de phase ;
   - un inversement du niveau logique d'au moins une sortie de phase ;
   - une synchronisation avec un changement logique d'une entrée de commande ;
   - une attente d'une durée prédéterminée ; et
   - un redémarrage d'une séquence prédéterminée ;
▪ un organe d'inhibition du module de chargement ; et
▪ un module d'exécution des instructions chargées par le module de chargement, le module d'exécution étant configuré pour :
   - commander la position d'au moins un commutateur commandé suite à une instruction d'application ;
   - commander l'activation d'au moins un inverseur commandé suite à une instruction d'inversement ;
   - détecter un changement logique suite à une instruction de synchronisation ;
   - commander l'inhibition de l'organe d'inhibition pendant une durée mesurée par le compteur suite à une instruction d'attente ; et
   - commander la position d'un pointeur du module de chargement suite à une instruction de redémarrage.

L'invention permet, avec ces quelques instructions simples et faciles à implémenter, de programmer les phases d'un détecteur, par exemple un détecteur infrarouge. En d'autres termes, la recherche des instructions les plus simples permettant de générer les phases spécifiques d'un détecteur a permis une réduction drastique des possibilités d'un générateur de phases programmable classique pour limiter sa complexité.

L'invention permet ainsi d'obtenir un générateur de phases programmable avec une consommation comparable à celle d'un générateur de phases figé. Plus le nombre de modes de fonctionnement du détecteur est important, plus l'utilisation du générateur de phases programmable de l'invention devient avantageuse par rapport à un générateur de phases figé. Typiquement, pour un détecteur présentant plus de 15 modes de fonctionnement, par exemple 18 modes de fonctionnement, le générateur de phases programmable de l'invention est plus avantageux qu'un générateur de phases figé car ils présentent tous deux une consommation équivalente. Cependant, le générateur de phases programmable permet d'obtenir des phases optimales en prenant en compte les éléments parasites et les limitations du détecteur infrarouge, observables après sa réalisation.

Les instructions minimales identifiées pour former les différentes phases classiques d'un détecteur sont :
▪ l'application d'un niveau logique sur au moins une sortie de phase ;
▪ l'inversement du niveau logique d'au moins une sortie de phase ;
▪ la synchronisation avec au moins une entrée de commande ;
▪ l'attente d'une durée prédéterminée ; et
▪ le redémarrage d'une séquence prédéterminée.

L'application d'un niveau logique est implémentée par un simple commutateur commandé associé à chaque sortie.

Pour ce faire, chaque commutateur commandé est câblé entre une sortie et le niveau logique « 1 » ou le niveau logique « 0 » en fonction de la commande appliquée sur le commutateur commandé.

De la même manière, un simple inverseur commandé est placé au niveau de chaque sortie pour permettre l'inversement du niveau logique d'une sortie.

Pour synchroniser l'exécution du microcode sur la réception d'un signal externe, un détecteur permet de détecter un changement logique d'une entrée de commande.

Dans l'attente de ce signal de synchronisation, il convient d'inhiber le fonctionnement du module de chargement par l'organe d'inhibition. Pour ce faire, il est possible d'utiliser un signal d'inhibition généré par le module d'exécution.

De préférence, ledit organe d'inhibition du module de chargement est interposé entre un signal d'horloge de la machine élémentaire et un signal d'horloge transmis au module de chargement. Ainsi, il est possible d'inhiber facilement le fonctionnement du module de chargement en bloquant son signal d'horloge utilisé pour cadencer ses opérations.

L'instruction d'attente nécessite également d'inhiber le fonctionnement du module de chargement pendant que le module d'exécution utilise le compteur pour atteindre la durée d'attente prédéterminée. De préférence, les instructions permettent d'effectuer :
▪ une attente courte ; et
▪ une attente longue ;
la longueur de l'argument de l'attente longue étant supérieure à la longueur de l'argument de l'attente courte.

De préférence, l'argument de l'attente courte est codé sur 4 bits. Cette attente courte permet ainsi de représenter le fonctionnement de toutes les phases à forte variation avec le nombre de bits optimum pour limiter les ressources de la machine élémentaire.

De préférence, l'argument de l'attente longue est codé sur 14 bits. Cette attente longue permet de représenter le fonctionnement de toutes les phases à faible variation avec le nombre de bits optimum pour prendre en compte le maximum de durée de variation constatée sur les phases d'un détecteur.

Outre ces instructions, une autre instruction permet préférentiellement de placer la machine élémentaire dans un mode de faible consommation, dans lequel le module d'exécution inhibe le fonctionnement de plusieurs composants de la machine élémentaire.

Par ailleurs, il est possible de générer plusieurs phases avec une seule machine élémentaire ou plusieurs machines élémentaires juxtaposées. Par exemple, le générateur de phases peut comporter au moins deux machines élémentaires. Ce mode de réalisation permet d'augmenter le nombre de phases pouvant être générées simultanément.

De préférence, le générateur de phases comporte un multiplexeur programmable disposé en sortie de la machine élémentaire. Ce mode de réalisation permet également de faciliter le codage d'un mode de fonctionnement du détecteur en modifiant le routage des sorties de ladite machine élémentaire.

### BREVE DESCRIPTION DES FIGURES

L'invention sera bien comprise à la lecture de la description qui suit, dont les détails sont donnés uniquement à titre d'exemple, et développée en relation avec les figures annexées, dans lesquelles des références identiques se rapportent à des éléments identiques :
La figure 1 illustre un fichier de programmation et le code binaire associé d'un registre d'une machine élémentaire d'un générateur de phases programmable selon un mode de réalisation de l'invention ;
La figure 2 illustre une machine élémentaire d'un générateur de phases programmable selon un mode de réalisation de l'invention ;
La figure 3 illustre un module de chargement de la machine élémentaire de la figure 2 ;
La figure 4 illustre le séquencement des opérations entre le module de chargement et un module d'exécution de la machine élémentaire de la figure 2 ;
La figure 5 illustre un générateur de phases programmable intégrant deux machines élémentaires de la figure 2 ; et
La figure 6 illustre un exemple de phases générés par le générateur de phases programmable de la figure 5.

### DESCRIPTION DETAILLEE DE L'INVENTION

Le générateur de phases programmable 10 de l'invention est capable de générer plusieurs formes de phases en fonction d'un microcode.

Ce microcode est formé par un ensemble de bits stockés dans un registre 12 d'une machine élémentaire 14 du générateur de phases programmable 10. Dans la description qui suit, une « fonction informatique » correspond à une commande d'un langage de programmation informatique permettant de formuler un algorithme. En outre, une « instruction » correspond à une implémentation physique d'une fonction informatique dans le registre 12 d'une machine élémentaire 14. L'ensemble de ces instructions stockées dans le registre 12 forme le « microcode ».

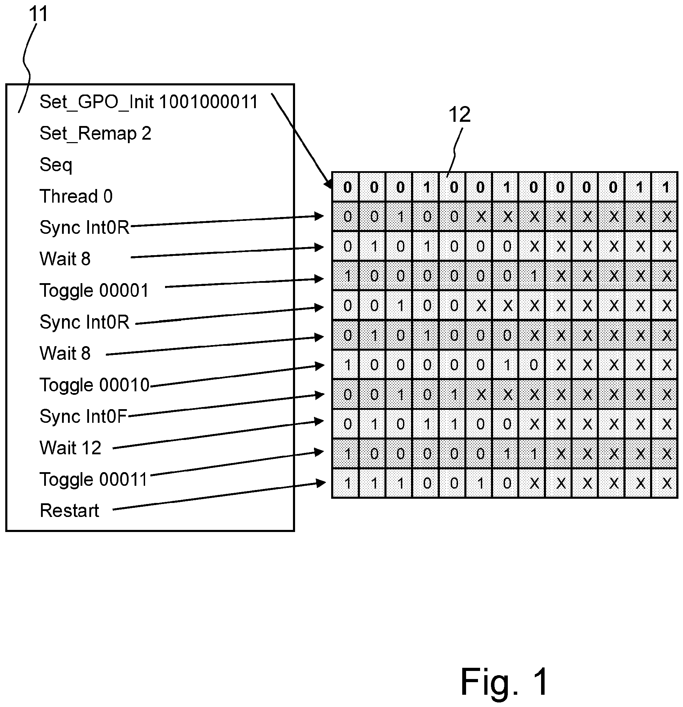

Pour obtenir ce microcode, une machine de programmation 28 transforme un fichier de programmation 11 en microcode, tel qu'illustré sur la figure 1. Le fichier de programmation 11 peut être codé avec un langage de programmation spécifiquement adapté au générateur de phases programmable 10 ou en utilisant un langage de programmation générique, tel que le langage assembleur ou le langage C. Bien entendu, les fonctions classiquement utilisées par ces langages ne pourront pas toutes être implémentées dans le registre 12, car au maximum sept instructions Inst peuvent être reconnues par la machine de programmation 28 pour être intégrées dans le registre 12. En effet, pour limiter la complexité et la consommation de la machine élémentaire 14, les instructions Inst sont codées sur 3 bits, si bien que seulement 7 fonctions informatiques peuvent être reconnues par la machine de programmation 28.

Dans l'exemple de la figure 1, un fichier de programmation 11 typique de la génération de phases est décrit. Dans ce fichier de programmation 11, une première fonction informatique Set_GPO_Init permet d'appliquer un niveau logique sur les différentes sorties de phases INT, XRINT1, XRINT2 du générateur de phases programmables 10. Il s'agit d'une instruction d'initialisation du générateur de phases programmable 10. Lors de la transformation du fichier de programmation 11 dans le registre 12, cette première fonction informatique Set_GPO_Init est codée 000 et l'argument de cette fonction informatique **Set_GPO_Init** est placé à la suite du code 000 dans le registre 12.

Au sens de l'invention, on entend par « argument » la variable d'une fonction informatique.

La seconde fonction informatique Set_Remap du fichier de programmation 11 spécifie une position d'un multiplexeur programmable 26 du générateur de phases programmable 10.

La troisième fonction informatique Seq du fichier de programmation 11 indique une balise à partir de laquelle le programme sera exécuté en boucle. Cette balise permet donc de programmer une boucle infinie entre la fonction informatique Restart et la fonction informatique Seq.

La quatrième fonction informatique Thread du fichier de programmation 11 permet de spécifier la machine élémentaire 14 sur laquelle le microcode doit être exécuté.

En utilisant l'argument 0 après la fonction informatique **Thread,** la première machine élémentaire 14 est visée pour la boucle décrite entre la fonction informatique Seq et la fonction informatique **Restart.** Dans l'exemple de la figure 1, une seule machine élémentaire 14 est programmée. En variante, plusieurs machines élémentaires 14 peuvent être implémentées dans le générateur de phases programmable 10 et le fichier de programmation 11 peut intégrer des fonctions informatiques pour plusieurs machines élémentaires 14 distinctes en utilisant plusieurs fonctions informatiques **Thread** avec des arguments distincts.

La première ligne de la boucle infinie comporte la fonction informatique de synchronisation **Sync** permettant la synchronisation avec au moins une entrée de commande **GPI_0, GPI_1** de la machine élémentaire 14. Plus spécifiquement, cette instruction est codée 001 et vise la détection d'un front montant sur le signal interne **IntOR** de la machine élémentaire 14. L'argument de cette fonction est 00 et il permet de définir sur quel signal interne doit être synchronisé cette fonction. Ainsi, pour implémenter cette fonction informatique **Sync IntOR,** le registre 12 intègre une seconde ligne avec l'instruction 001, correspondant à une fonction informatique de synchronisation **Sync,** et avec l'argument 00 correspondant à une détection d'un front montant sur le signal interne **IntOR.** Les bits suivants sont représentés par un X car ils sont aléatoires et ils n'influencent pas le fonctionnement de la machine élémentaire 14.

La troisième instruction codée dans le registre 12 concerne la fonction informatique d'attente **Wait** d'une durée prédéterminée dont l'argument est 8. Dans l'exemple de la figure 1, cette instruction d'attente est codée 010 dans le registre 12 et l'argument 8 est codé sur quatre bits avec pour valeur binaire 1000. Dans l'exemple de la figure 1, un seul type d'instruction d'attente est décrit, et est codé sur quatre bits. En variante, deux instructions d'attente peuvent être implémentées : une instruction d'attente courte et une instruction d'attente longue.

L'instruction d'attente courte présente alors un argument codé sur 4 bits, tel qu'illustré sur la figure 1 alors que l'instruction d'attente longue peut comprendre un argument codé sur un plus grand nombre de bits, par exemple 14 bits, pour décrire la variation de phases très peu sollicitées.

Suite à cette instruction d'attente, la boucle infinie comporte une fonction informatique d'inversement **Toggle** du niveau logique d'au moins une sortie de phases **GPO_0-GPO_9.**

Cette fonction informatique d'inversement **Toggle** est utilisée avec un argument de 5 bits permettant de spécifier une ou plusieurs sorties de phases **GPO_0-GPO_9** à inverser. Cette fonction informatique d'inversement **Toggle** est codée sous la forme de l'instruction 100 dans le registre **12** et, suite à ce code de l'instruction **Inst,** le registre **12** présente la valeur de l'argument 00001.

Une nouvelle fonction informatique de synchronisation **Sync** est ensuite codée dans le registre **12.** Cette fonction informatique de synchronisation **Sync** est similaire à celle intégrée dans la seconde ligne du registre **12** et elle est également suivie par une fonction informatique d'attente **Wait** également similaire à celle précédemment utilisée.

Suite à cette seconde fonction informatique d'attente **Wait,** une nouvelle fonction informatique d'inversement **Toggle** est utilisée. Cette seconde fonction informatique d'inversement **Toggle** présente un argument différent de la première fonction informatique d'inversement **Toggle,** puisque l'argument de la seconde fonction informatique d'inversement **Toggle** est 00010.

Une nouvelle fonction informatique de synchronisation **Sync** est ensuite programmée avec un argument visant à détecter un front montant sur le signal interne **Int0F**. Cette détection d'un front montant sur le signal interne **Int0F** est codée 01. Ainsi, la ligne du registre **12** associée à cette fonction informatique de synchronisation **Sync** présente les bits 00101, avec le code 001 pour décrire l'instruction de synchronisation et l'argument 01 pour décrite l'argument de cette instruction.

Suite à cette fonction informatique de synchronisation **Sync,** une nouvelle fonction informatique d'attente **Wait** est codée avec une durée d'attente de 12. Ainsi, l'argument de cette fonction informatique de synchronisation **Sync** est codé 1100. La dernière instruction de la boucle infinie correspond à une nouvelle fonction informatique d'inversement **Toggle** avec pour argument le code binaire 0001.

Pour finir, la fonction informatique de redémarrage **Restart** est codée dans le registre **12** avec le code 111. Cette instruction 111 présente l'argument 0010 qui renvoie à la seconde ligne du registre **12,** car la fonction informatique de redémarrage **Restart** fait écho à la balise **Seq** placée après la fonction informatique **Set_GPO_Init.**

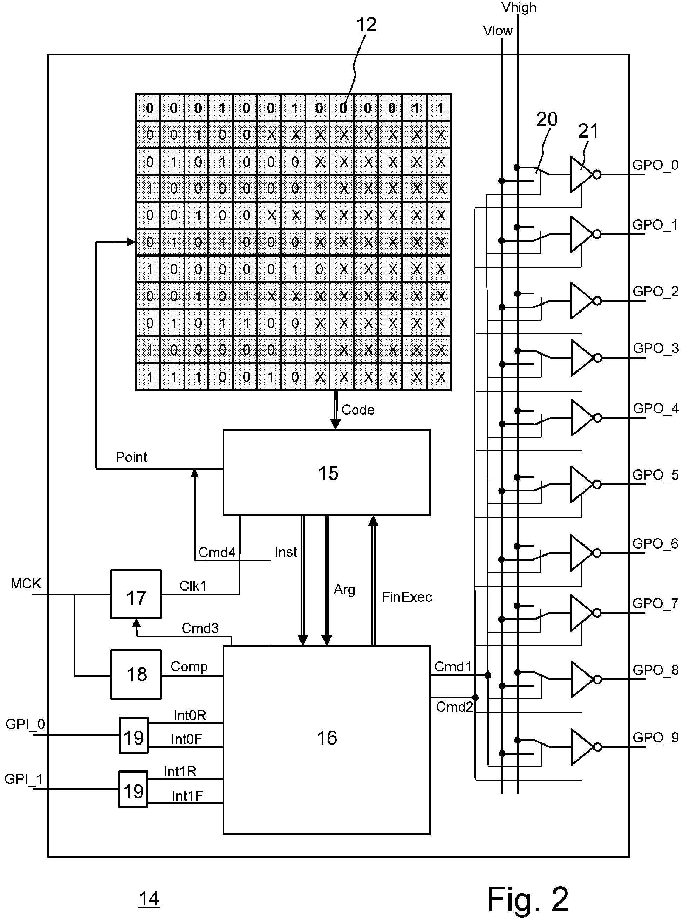

Pour interpréter ces différentes instructions avec leurs arguments respectifs, une machine élémentaire **14** peut être développée sur la base du modèle de la figure 2. Cette machine élémentaire **14** comporte deux entrées de commandes **GPI_0, GPI_1** permettant de contrôler le fonctionnement de la machine élémentaire lors d'une instruction de synchronisation. Pour ce faire, chaque entrée de commande comporte un détecteur **19** permettant de détecter un changement logique, c'est-à-dire un front montant ou un front descendant sur chaque entrée de commande **GPI_0, GPI_1.** En sortie des détecteurs **19** associés à chaque entrée de commande **GPI_0, GPI_1,** la machine élémentaire 14 comporte des signaux internes indiquant les détections de fronts montants **Int0F** et **IntIF** ou de fronts descendants **IntOR** et **IntOR** des deux entrées de commande **GPI_0, GPI_1.** La machine élémentaire **14** présente également dix sorties de phases **GPO_0-GPO_9** destinées à contrôler un détecteur. Pour implémenter les instructions d'application, chaque sortie de phase **GPO_0-GP0_9** comporte un commutateur commandé **20.** Chaque commutateur commandé **20** est câblé entre une sortie **GPO**_**0-GPO_9** et le niveau logique haut, appelé **Vhigh,** ou le niveau logique bas, appelé **Vlow,** en fonction de la commande **Cmd1** appliquée sur le commutateur commandé **20.** En plus de ce commutateur commandé **20,** chaque sortie **GPO**_**0-GPO_9** comporte également un inverseur logique **21,** permettant d'appliquer l'instruction d'inversement du niveau logique de la sortie **GPO_0-GPO_9** lors de l'application d'un signal de commande **Cmd2.**

En outre, la machine élémentaire **14** comporte également une entrée **MCK** pour un signal d'horloge permettant le cadencement de l'exécution des instructions. Ce signal d'horloge **MCK** est connecté sur un organe d'inhibition **17** et un compteur **18.**

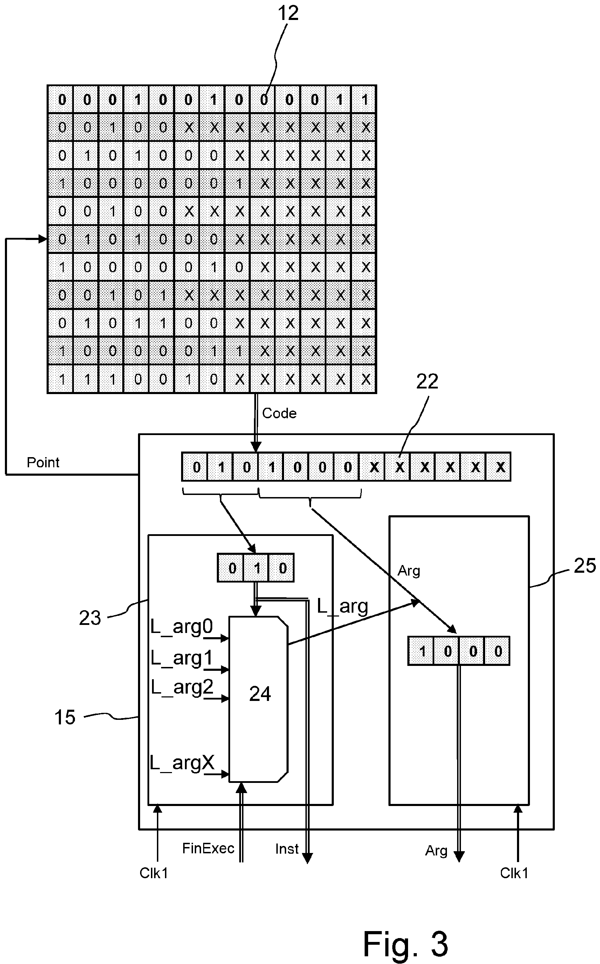

La machine élémentaire **14** a pour fonction de décoder le microcode chargé dans le registre **12.** Pour ce faire, la machine élémentaire **14** comporte un module de chargement **15** configuré pour détecter l'instruction **Inst** à effectuer ainsi que son argument **Arg.** Ce module de chargement **15** est relié à un module d'exécution **16** configuré pour exécuter les instructions **Inst** transmises par le module de chargement **15.** Le module de chargement **15** est plus particulièrement détaillé sur la figure 3. Ce module de chargement **15** comporte un décodeur d'instructions **23** relié à un décodeur des arguments **25.** Pour chaque ligne du registre **12,** le module de chargement **15** utilise un pointeur **Point** pour extraire une ligne particulière.

Dans l'exemple de la figure 3, une ligne est recopiée dans un registre interne **22** pour faciliter la compréhension de l'extraction des bits utiles. De préférence, l'extraction des données du registre **12** peut être réalisée directement sur le registre **12** sans nécessiter une recopie dans un registre interne **22.**

À partir de cette ligne extraite, les trois premiers bits sont transmis à un registre d'instruction dans le décodeur d'instruction **23.** Encore une fois, le registre d'instruction, comme le registre interne **22,** vise à illustrer le procédé d'extraction des bits utiles et il n'est pas nécessaire en pratique.

Lorsque les bits correspondant à l'instruction sont extraits du registre **12,** ils peuvent être directement transmis au module d'exécution **16** par le signal **Inst.** En outre, ces bits sont également dirigés vers un sélectionneur **24** dont les entrées correspondent aux différentes tailles d'arguments possibles des différentes instructions **L_arg0**, **L_arg1**, **L_arg2** ... **L_argX.** Ainsi, en fonction de l'instruction détectée, la taille de son argument **L_arg** est délivrée en sortie du sélectionneur **24.** Cette taille d'argument **L_arg** est transmisse au décodeur des arguments **25** qui recopie le nombre de bits correspondant à la taille de l'argument dans un registre d'argument. Encore une fois, le registre d'argument, comme le registre interne **22,** vise à illustrer le procédé d'extraction des bits utiles et il n'est pas nécessaire en pratique. Les bits correspondants à l'argument peuvent ensuite être transmis au module d'exécution **16** par le signal **Arg.**

Tel qu'illustré sur la figure 3, le module de chargement **15** est préférentiellement cadencé par un signal d'horloge **Clk1**. Pour ce faire, le décodeur d'instruction **23** peut être configuré pour réaliser un décodage à chaque front montant du signal d'horloge **Clk1**. A l'intérieur du décodeur d'instruction **23,** le sélectionneur **24** peut également être inhibé jusqu'à l'obtention d'un signal de fin d'exécution **FinExec** du module d'exécution **16.**

Pour exécuter les différentes instructions, le module d'exécution **16** reçoit donc l'instruction **Inst** et l'argument **Arg** de la fonction à exécuter.

Lorsque l'instruction **Inst** à exécuter correspond à une fonction informatique d'application d'un niveau logique **Set_GPO_Init,** le module d'exécution **16** commande directement les commutateurs commandés **20** au moyen du signal **Cmd1** en fonction de l'argument **Arg** transmis par le module de chargement **15.** De la même manière, pour exécuter une instruction d'inversement, le module d'exécution **16** commande les inverseurs **21** au moyen du signal **Cmd2** en fonction de l'argument **Arg** transmis.

Ces fonctions d'application et d'inversement peuvent être réalisées de manière synchrone avec le décodage des instructions réalisées par le module de chargement **15.** Pour les autres fonctions d'attente ou de synchronisation, il est nécessaire d'inhiber le fonctionnement du module de chargement **15** pendant une durée. Pour ce faire, le signal d'horloge **Clk1** transmis au module de chargement est préférentiellement généré par le module d'inhibition **17** commandé par le signal de commande **Cmd3** du module d'exécution **16.** Ainsi, pour une instruction de synchronisation, le module d'exécution **16** attend la détection du signal de synchronisation programmé avant de lever l'inhibition du module d'inhibition **17** et permettre au module de chargement **15** de poursuivre le chargement d'une nouvelle instruction **Inst** et de son argument **Arg.** De la même manière, le module d'inhibition **17** est également utilisé lors d'une instruction d'attente. Dans ce cas, le module d'exécution **16** utilise le compteur **18** pour compter une durée d'attente correspondant à l'argument **Arg** programmé avant de lever l'inhibition du module d'inhibition **17.**

Au lieu d'utiliser un module d'inhibition **17** directement positionné sur le signal d'horloge du module de chargement **15,** un signal de fin d'exécution **FinExec** peut être transmis au module de chargement **15** par le module d'exécution **16,** lorsque l'exécution est terminée et que le module d'exécution **16** peut recevoir une nouvelle instruction **Inst.**

En outre, l'instruction d'attente peut être codée sous la forme de deux instructions distinctes : une attente longue et une attente courte avec des arguments de longueur différente. Dans les deux cas, le module d'exécution **16** est capable d'interpréter ces deux attentes au moyen du compteur **18.**

En ce qui concerne l'instruction de redémarrage du programme, cette instruction vise uniquement à modifier la position du pointeur **Point** du module de chargement **15.** Pour ce faire, le module d'exécution **16** utilise le signal de commande **Cmd4** pour déplacer le pointeur **Point** sur la position correspondant à l'argument **Arg** programmé.

En plus de ces six instructions, il est possible d'implémenter une septième instruction avec un codage de 3 bits pour ces différentes instructions. De préférence, la septième instruction correspond au placement de la machine élémentaire **14** dans un mode de faible consommation d'énergie. Dans ce mode, le module d'exécution peut commander la désactivation d'une partie des composants électroniques de la machine élémentaire **14** pour limiter sa consommation.

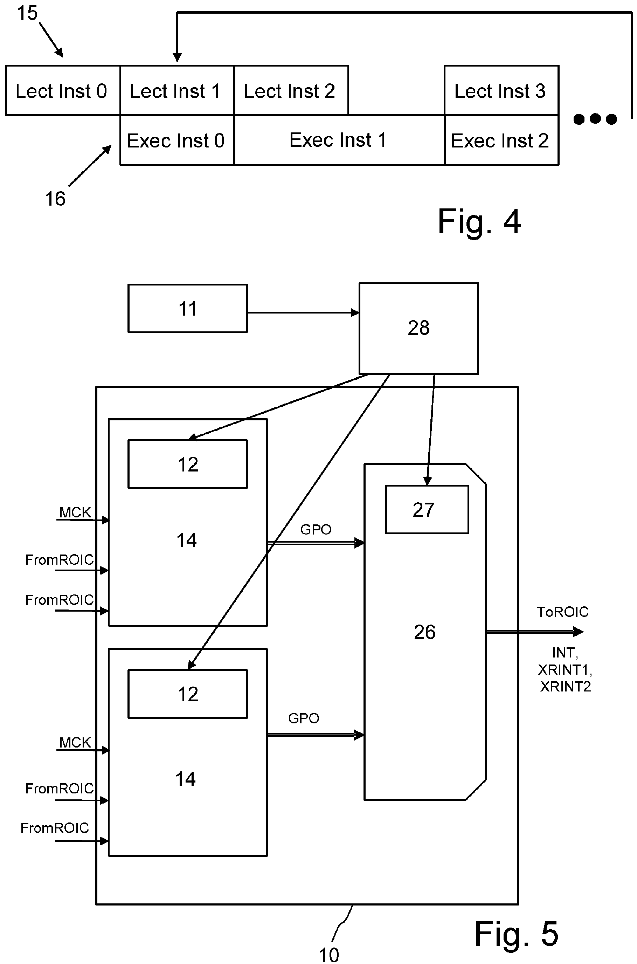

Tel qu'illustré sur la figure 4, les relations entre le module de chargement **15** et le module d'exécution **16** sont parfois régulières et parfois irrégulières. Pour des instructions d'application ou d'inversement, au premier cycle d'horloge, le module de chargement **15** procède à la lecture de l'instruction **Inst,** puis transmet l'argument **Arg** de cette instruction **Inst** au module d'exécution **16.** Au deuxième cycle d'horloge, le module de chargement **15** charge la seconde instruction **Inst** pendant que le module d'exécution **16** exécute la première instruction **Inst.**

La seconde instruction nécessite une inhibition du module de chargement **15,** par exemple pour la synchronisation d'un signal sur une entrée de commande **GPI_0, GPI_1** de la machine élémentaire **14.** Ainsi, lors du troisième cycle d'horloge, le module de chargement **15** procède à la lecture de la troisième instruction **Inst,** pendant que le module d'exécution **16** exécute la seconde instruction tout en inhibant le fonctionnement du module de chargement **15.** Lorsque la seconde instruction est exécutée, par exemple lorsque le signal d'un détecteur **19** est reçu par le module d'exécution **16,** le fonctionnement du module de chargement **15** est réactivé, et celui-ci peut charger une nouvelle instruction **Inst** pendant que le module d'exécution **16** exécute l'instruction **Inst** précédemment chargée.

Ce fonctionnement entre le module de chargement **15** et le module d'exécution **16** permet de générer rapidement et efficacement les différentes phases d'un détecteur **10.** Ainsi, il est possible de former un générateur de phases **10** d'un détecteur avec une seule machine élémentaire **14.**

Pour améliorer le nombre de phases pouvant être générées, le générateur de phases 10 peut comporter plusieurs machines élémentaires **14** juxtaposées, tel qu'illustré sur la figure 5.

Dans l'exemple de la figure 5, deux machines élémentaires **14** sont utilisées et chaque machine élémentaire **14** intègre son propre registre **12.** En outre, les sorties des machines élémentaires **14** sont introduites dans un multiplexeur programmable **26** dont un registre **27** permet de spécifier la topologie de routage.

À partir du fichier de programmation **11,** la machine de programmation **28** peut ainsi programmer les deux registres **12** des deux machines élémentaires **14** ainsi que le registre **27** du multiplexeur programmable **26.**

Dans l'exemple de la figure 5, les entrées de commandes **GPI_0, GPI_1** des deux machines élémentaires **14** sont associées à des signaux provenant d'un détecteur **FromROIC,** alors que les sorties du multiplexeur programmable **26** forment les phases **INT, XRINT1, XRINT2** permettant de commander le fonctionnement du détecteur **ToROIC.** En variante, il est possible d'utiliser une ou plusieurs entrées de commande **GPI_0, GPI_1** d'une machine élémentaire **16** pour commander le mode de génération des phases en utilisant une fonction informatique de synchronisation sur une entrée de commande **GPI_0, GPI_1.**

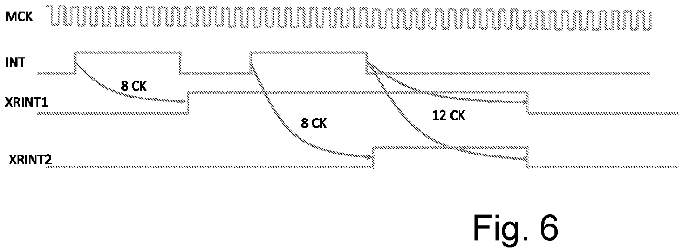

La figure 6 illustre un exemple de phases caractéristiques d'un détecteur **10** générées à partir du fichier de programmation **11** de la figure 1 et implémentées par une machine élémentaire **14.** Tel qu'illustré sur la figure 6, un signal d'horloge **MCK** est utilisé pour cadencer la génération des différentes phases **INT, XRINT1, XRINT2** et les transitions entre ces phases **INT, XRINT1, XRINT2** apparaissent avec les durées d'attente, 8 et 12, codées dans le fichier de programmation **11.**

L'invention permet ainsi de générer les phases **INT, XRINT1, XRINT2** d'un détecteur, par exemple d'un détecteur infrarouge. En reprogrammant le générateur de phases **10,** la forme des phases peut être déterminée après la réalisation du détecteur en prenant en compte les limitations techniques de celui-ci. Ainsi, la forme des phases peut être optimale en fonction du mode de fonctionnement recherché.

En outre, la simplicité des composants utilisés pour mettre en oeuvre ce générateur de phases **10** permet de limiter sa consommation, si bien que la consommation du générateur de phases **10** programmable est similaire à celle d'un générateur de phases figé intégrant plus de 15 modes de fonctionnement.

## Revendications

1. Générateur de phases (10) d'un détecteur de rayonnements électromagnétiques, le générateur intégrant au moins une machine élémentaire (14) d'interprétation d'un microcode stocké dans un registre (12), chaque machine élémentaire (14) comportant :
▪ au moins une entrée de commande (GPI_0, GPI_1) comportant un détecteur (19) de changement de niveau logique ;
▪ au moins une sortie de phase (GPO_0-GPO_9) comportant un commutateur commandé (20), permettant de définir le niveau logique de la sortie de phase (GPO_0-GPO_9), et un inverseur commandé (21) permettant d'inverser le niveau logique de la sortie de phase (GPO _0-GPO_9) ;
▪ au moins un signal d'horloge (MCK, Clk1) associé à un compteur (18) ;
▪ un module de chargement (15) des instructions (Inst) et des arguments (Arg) stockés dans le registre (12), les instructions (Inst) étant codées sur 3 bits et permettant d'effectuer au moins :
- une application (Set_GPO_Init) d'un niveau logique sur au moins une sortie de phase (GPO_0-GPO_9) ;
- un inversement (Toggle) du niveau logique d'au moins une sortie de phase (GPO_0-GPO_9) ;
- une synchronisation (Sync) avec un changement logique d'une entrée de commande (GPI_0, GPI_1) ;
- une attente (Wait) d'une durée prédéterminée ; et
- un redémarrage (Restart) d'une séquence prédéterminée ;
▪ un organe d'inhibition (17) du module de chargement (15) ; et
▪ un module d'exécution (16) des instructions (Inst) chargées par le module de chargement (15), le module d'exécution (16) étant configuré pour :
- commander (Cmd1) la position d'au moins un commutateur commandé (20) suite à une instruction (Inst) d'application (Set_GPO_Init) ;
- commander (Cmd2) l'activation d'au moins un inverseur commandé (21) suite à une instruction (Inst) d'inversement (Toggle) ;
- détecter (IntOR, IntOF, Int1R, Int1F) un changement logique suite à une instruction (Inst) de synchronisation (Sync) ;
- commander (Cmd3) l'inhibition par l'organe d'inhibition (17) pendant une durée mesurée par le compteur (18) suite à une instruction d'attente (Wait) ; et
- commander (Cmd4) la position d'un pointeur (Point) du module de chargement (15) suite à une instruction de redémarrage (Restart).

2. Générateur de phases selon la revendication 1, ***dans lequel*** ledit organe d'inhibition (17) du module de chargement (15) est interposé entre un signal d'horloge (MCK) de la machine élémentaire (14) et un signal d'horloge (Clk1) transmis au module de chargement (15).

3. Générateur de phases selon la revendication 1 ou 2, ***dans lequel*** les instructions (Inst) permettent d'effectuer :
▪ une attente courte ; et
▪ une attente longue ;
la longueur de l'argument de l'attente longue étant supérieure à la longueur de l'argument de l'attente courte.

4. Générateur de phases selon la revendication 3, ***dans lequel*** l'argument (Arg) de l'attente courte est codé sur 4 bits.

5. Générateur de phases selon la revendication 3 ou 4, ***dans lequel*** l'argument (Arg) de l'attente longue est codé sur 14 bits.

6. Générateur de phases selon l'une des revendications 1 à 5, ***dans lequel*** une instruction (Inst) permet de placer la machine élémentaire (14) dans un mode de faible consommation, dans lequel le module d'exécution (16) inhibe le fonctionnement de plusieurs composants de la machine élémentaire (14).

7. Générateur de phases selon l'une des revendications 1 à 6, ***dans lequel*** le module d'exécution (16) exécute une instruction (Inst) pendant que le module de chargement (15) charge la prochaine instruction (Inst) à exécuter par le module d'exécution (16).

8. Générateur de phases selon l'une des revendications 1 à 7, ***dans lequel*** le générateur de phases (10) comporte au moins deux machines élémentaires (14).

9. Générateur de phases selon l'une des revendications 1 à 7, ***dans lequel*** le générateur de phases (10) comporte un multiplexeur programmable (25) disposé en sortie de l'au moins une machine élémentaire (14).

## Patentansprüche

1. Taktgenerator (10) eines elektromagnetischen Strahlungssensors, wobei der Generator mindestens ein elementares Gerät (14) zur Interpretation eines Mikrocodes enhält, der in einem Register (12) gespeichert ist, dabei enthält jedes elementare Gerät (14):
■ mindestens einen Steuereingang (GP10, GP 11) mit einem Sensor für Änderungen des Logikpegels (19);
■ mindestens einen Phasenausgang (GPO0-GPO9) mit einem gesteuerten Schalter (20), der eine Definition des Logikpegels des Phasenausgangs (GPO0-GPO9) ermöglicht, sowie einen gesteuerten Inverter (21), der eine Umschaltung des Logikpegels des Phasenausgangs (GPO0-GPO9) ermöglicht;
■ mindestens ein Taktsignal (MCK, Clk1) verbunden mit einem Zähler (18);
■ ein Lademodul (15) für Anweisungen (Inst) und Argumente, die im Register (12) gespeichert sind, wobei die Anweisungen (Inst) 3-Bit- codiert sind und sie mindestens die Ausführung ermöglichen:
- einer Anwendung (SetGPOInit) eines Logikpegels an mindestens einem Phasenausgang (GPO_0-GPO_9);
- einer Umkehrung (Toggle) des Logikpegels mindestens eines Phasenausgangs (GPO 0-GPO_9);
- einer Synchronisierung (Sync) mit einem Logikwechsel eines Steuereingangs (GP1_0, GP1_1);
- einer Wartezeit (Wait) mit vorher festgelegter Länge; und
- eines Neustarts (Restart) einer vorher festgelegten Sequenz;
■ eine Hemmvorrichtung (17) des Lademoduls (15); und
■ ein Ausführungsmodul (16) der Anweisungen (Inst), die vom Lademodul (15) eingespeist werden, das Ausführungsmodul (16) ist dabei konfiguriert zur:
- Steuerung (Cmd1) der Position mindestens eines gesteuerten Schalters (20) infolge einer Anweisung (Inst) zur Anwendung (Set GPO Init);
- Steuerung (Cmd2) der Aktivierung mindestens eines gesteuerten Inverters (21) infolge einer Anweisung (Inst) zur Umschaltung (Toggle);
- Erkennung (IntOR, IntOF, IntlR, IntlF) eines Logikwechsels infolge einer Anweisung (Inst) zur Synchronisierung (Sync);
- Steuerung (Cmd3) der Hemmung über die Hemmvorrichtung (17) während einer vom Zähler (18) gemessenen Dauer infolge einer Warteanweisung (Wait); und
- Steuerung (Cmd4) der Position eines Zeigers (Point) des Lademoduls (15) infolge einer Neustartanweisung (Restart).

2. Taktgenerator nach Anspruch 1, *bei dem* die erwähnte Hemmvorrichtung (17) des Lademoduls (15) zwischen einem Taktsignal (MCK) des elementaren Geräts (14) und einem an das Lademodul (15) übermittelten Taktsignal (Clkl) geschaltet ist.

3. Taktgenerator nach Anspruch 1 oder 2, *bei dem* die Anweisungen (Inst) die Ausführung ermöglichen:
■ einer kurzen Wartezeit; und
■ einer langen Wartezeit;
die Länge des Arguments der langen Wartezeit ist dabei höher als die Länge des Arguments der kurzen Wartezeit.

4. Taktgenerator nach Anspruch 3, ***bei dem*** das Argument (Arg) der kurzen Wartezeit 4-Bit-codiert ist.

5. Taktgenerator nach Anspruch 3 oder 4, ***bei dem*** das Argument (Arg) der langen Wartezeit 14-Bit-codiert ist.

6. Taktgenerator nach einem der Ansprüche 1 bis 5, ***bei dem*** eine Anweisung (Inst) es ermöglicht, das elementare Gerät (14) in einen Energiesparmodus zu schalten, in dem das Ausführungsmodul (16) die Betriebsweise mehrerer Komponenten des elementaren Geräts (14) hemmt.

7. Taktgenerator nach einem der Ansprüche 1 bis 6, ***bei dem*** das Ausführungsmodul (16) eine Anweisung (Inst) ausführt, während das Lademodul (15) die nächste Anweisung (Inst) lädt, die vom Ausführungsmodul (16) ausgeführt werden soll.

8. Taktgenerator nach einem der Ansprüche 1 bis 7, ***bei dem*** der Taktgenerator (10) mindestens zwei elementare Geräte (14) enthält.

9. Taktgenerator nach einem der Ansprüche 1 bis 7, ***bei dem*** der Taktgenerator (10) einen programmierbaren Multiplexer (25) enthält, angeordnet am Ausgang mindestens eines elementaren Geräts (14).

## Claims

1. A generator of phases (10) of an electromagnetic radiations detector, the generator integrating at least one elementary machine (14) for interpreting a microcode stored in a register (12), each elementary machine (14) comprising:
▪ at least one control input (GPI_0, GPI_1) comprising a logic level change detector (19);
▪ at least one phase output (GPO_0-GPO_9) comprising a controlled switch (20), enabling to define the logic level of the phase output (GPO_0-GPO_9), and a controlled inverter (21) enabling to toggle the logic level of the phase output (GPO_0-GPO_9);
▪ at least one clock signal (MCK, Clk1) associated with a counter (18);
▪ a unit for loading (15) the instructions (Inst) and the arguments (Arg) stored in the register (12), the instructions (Inst) being coded over 3 bits and enabling to implement at least:
- an application (Set_GPO_Init) of a logic level onto at least one phase output (GPO_0-GPO_9);
- a toggling (Toggle) of the logic level of at least one phase output (GPO_0-GPO_9);
- a synchronization (Sync) with a logic change of a control input (GPI_0, GPI_1);
- a wait (Wait) for a predetermined duration; and
- a restarting (Restart) of a predetermined sequence;
▪ means (17) for inhibiting the loading unit (15); and
▪ a unit (16) for executing the instructions (Inst) loaded by the loading unit (15), the execution unit (16) being configured to:
- control (Cmd1) the position of at least one controlled switch (20) after an instruction (Inst) of application (Set_GPO_Init);
- control (Cmd2) the activation of at least one controlled inverter (21) after an instruction (Inst) to toggle (Toggle);
- detect (IntOR, IntOF, Int1R, Int1F) a logic change after an instruction (Inst) of synchronization (Sync);
- control (Cmd3) the inhibition by the inhibition means (17) for a duration measured by the counter (18) after a wait instruction (Wait); and
- control (Cmd4) the position of a pointer (Point) of the loading unit (15) after a restart instruction (Restart).

2. The phase generator according to claim 1, ***wherein*** said means (17) for inhibiting the loading unit (15) are interposed between a clock signal (MCK) of the elementary machine (14) and a clock signal (Clk1) transmitted to the loading unit (15).

3. The phase generator according to claim 1 or 2, ***wherein*** the instructions (Inst) enable to implement:
▪ a short wait; and
▪ a long wait;
the length of the argument of the long wait being greater than the length of the argument of the short wait.

4. The phase generator according to claim 3, ***wherein*** the argument (Arg) of the short wait is coded over 4 bits.

5. The phase generator according to claim 3 or 4, ***wherein*** the argument (Arg) of the long wait is coded over 14 bits.

6. The phase generator according to any of claims 1 to 5, ***wherein*** an instruction (Inst) enables to place the elementary machine (14) in a low power consumption mode, where the execution unit (16) inhibits the operation of a plurality of components of the elementary machine (14).

7. The phase generator according to any of claims 1 to 6, ***wherein*** the execution module (16) executes an instruction (Inst) while the loading unit (15) loads the next instruction (Inst) to be executed by the execution unit (16).

8. The phase generator according to any of claims 1 to 7, ***wherein*** the phase generator (10) comprises at least two elementary machines (14).

9. The phase generator according to any of claims 1 to 7, ***wherein*** the phase generator (10) comprises a programmable multiplexer (25) arranged at the output of said at least one elementary machine (14).
